# EUROPEAN PATENT APPLICATION

(11) **EP 1 578 056 A1**
(43) Date of publication of application: **21.09.2005**
(21) Application number: 05251335.5
(22) Date of filing: 07.03.2005
(51) Int. Cl.: H04L 12/10

(54) **Supplying power remotely to multiple devices**

(30) Priority: 15.03.2004 US 801328
(71) Applicant: Agilent Technologies, Inc., Palo Alto, CA 94306 (US)
(72) Inventor: Engel, Glenn R., Snohomish, WA 98290 (US)
(74) Representative: Powell, Stephen David

(57) **Abstract**

A power device (204) supplies power to a node (216) using a power-transmitting network connection (218), such as, for example, a Power over Ethernet (PoE) connection, the node (216) supplying at least a portion of the power received over the power-transmitting network connection (218) to one or more downstream devices (220,222) using additional power-transmitting network connections (224,226). The one or more downstream devices (224,226) may be connected to the remove device (216) in a hub-and-spoke configuration. In other arrangements, the one or more downstream devices (314,320) are connected to the remote device (304) in a linear configuration or in some combination of the linear and hub-and-spoke configurations.

## Description

The present invention relates to a method and a system for supplying power to multiple devices using power-transmitting network connections. In network systems it is common to find hubs and switches located at a remote distance from a central location. Devices that connect to the hubs and switches may also be located at a remote distance from the hub and switch. In both of these situations, a source of power must be near the hub, switch, and remote devices to supply operating power to these network components.

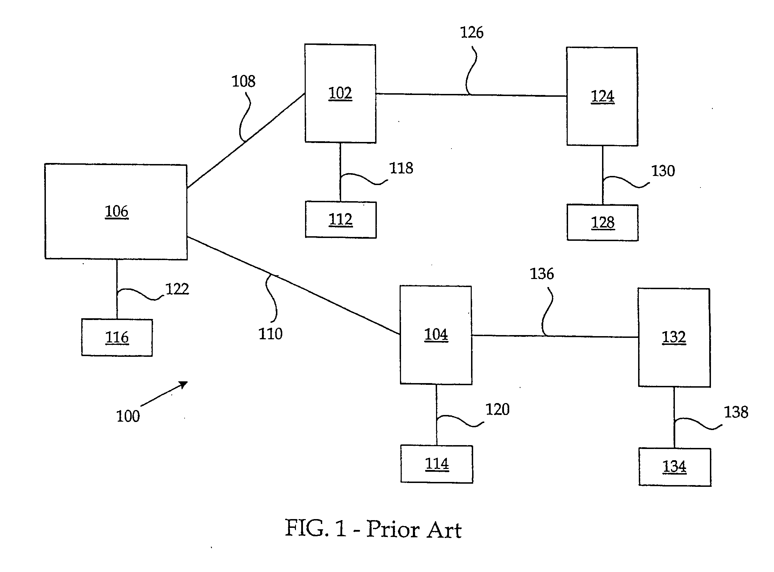

**FIG. 1** is a block diagram of a network according to the prior art. Network 100 includes two nodes 102, 104, such as a hub or switch, connected to a backbone switch 106 via cables 108,110, respectively. Nodes 102, 104, 106 are also connected to power supplies 112, 114, 116 with cables 118, 120, 122, respectively. Remote device 124 is connected to node 102 via cable 126. In order for remote device 124 to operate, it must be located near, and connected to, a power supply 128 using cable 130. Similarly, remote device 132 is connected to node 104 and power supply 134 via cables 136,138, respectively.

Power supplies 128, 134 are not always available at each remote location. This can limit where one or more network devices are placed. In some situations, a power supply can be constructed near a remote location prior to installing a network device. But this increases the cost of installing and maintaining network systems.

In accordance with the invention, a method and system for supplying power to multiple devices using power-transmitting network connections are provided. A power device supplies power to a node using a power-transmitting network connection, such as, for example, a Power over Ethernet (PoE) connection. The node supplies at least a portion of the power received over the power-transmitting network connection to one or more downstream devices using additional power-transmitting network connections. The one or more downstream devices may be connected to the remote device in a hub-and-spoke configuration in one embodiment in accordance with the invention. In other embodiments in accordance with the invention, the one or more downstream devices are connected to the remote device in a linear configuration or in some combination of the linear and hub-and-spoke configurations.

The invention will best be understood by reference to the following detailed description of embodiments in accordance with the invention when read in conjunction with the accompanying drawings, wherein:
**FIG. 1** is a block diagram of a network according to the prior art;
**FIG. 2** is a block diagram of a portion of a network in a first embodiment in accordance with the invention;
**FIG. 3** is a block diagram of a portion of a network in a second embodiment in accordance with the invention; and
**FIG. 4** is a block diagram of a portion of a network in a third embodiment in accordance with the invention.

The invention relates to a method and system for supplying power to multiple devices using power-transmitting network connections. The following description is presented to enable one skilled in the art to make and use the invention, and is provided in the context of a patent application and its requirements. Various modifications to the disclosed embodiments will be readily apparent to those skilled in the art, and the generic principles herein may be applied to other embodiments. Thus, the invention is not intended to be limited to the embodiments shown, but is to be accorded the widest scope consistent with the appended claims and with the principles and features described herein.

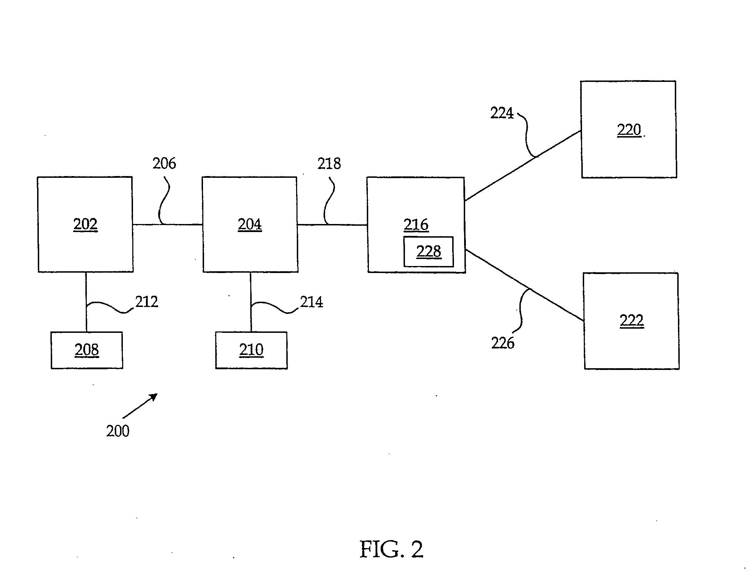

With reference now to the figures and in particular with reference to FIG. 2, there is shown a block diagram of a portion of a network in a first embodiment in accordance with the invention. Network 200 operates in accordance with the Institute of Electrical and Electronic Engineer (IEEE) 802.3af standard in this embodiment in accordance with the invention. The IEEE 802.3af standard provides for Power over Ethernet (PoE), which allows a device to receive power and data simultaneously over a network cable.

Network 200 includes an Ethernet device 202, such as a hub or switch, connected to a power device 204 via cable 206. In this embodiment in accordance with the invention, power device 204 is known as "midspan power sourcing equipment" pursuant to the IEEE 802.3af standard. Power supplies 208, 210 supply operating power to Ethernet device 202 and power device 204, respectively, via cables 212, 214.

Power device 204 is connected to a node 216 via cable 218. Node 216 may be configured, for example, as a hub, switch, or computing device in the FIG. 2 embodiment. Node 216 may also be connected to a source of power (not shown). Node 216 is connected to downstream devices 220, 222 via cables 224, 226, respectively. Device 220 and 222 may be implemented, for example, as a sensor, a camera, a wireless access point, or a Voice over IP (VoIP) phone system.

Power device 204 supplies operating power to node 216 by injecting power into cable 218. In addition to being a powered node, node 216 acts as a power supply in this embodiment because node 216 supplies operating power to devices 220, 222 via cables 224, 226. A power repeater 228 within node 216 injects at least a portion of the power received by node 216 into cables 224, 226 to supply power to devices 220, 222. Power repeater 228 may be configured, for example, as a hub, switch, or another device that receives power and supplies it to one or more output ports. In another embodiment in accordance with the invention, power repeater 228 is constructed outside of node 216 and is connected to node 216 via an appropriate cable.

Cables 218, 224, and 226 are configured as CAT5 Ethernet cables in this embodiment in accordance with the invention. Power is supplied over the cables using unused signal pairs in the CAT5 cable. In one embodiment in accordance with the invention, node 216 notifies power device 204 as to the amount of power node 216 should receive. In another embodiment in accordance with the invention, power device 204 determines the amount of power to supply to node 216.

Those skilled in the art will appreciate the IEEE 802.3af defines several device Class types. Each class type is based on the power requirements of a device, including the maximum amount of power a device can receive. The Class type of a node connected to a power device, as well as the number of downstream devices and their Class types, determine the total number of devices that can receive power from the power device over a PoE network connection. For example, a Class 0 device can potentially supply power to multiple Class 1 devices.

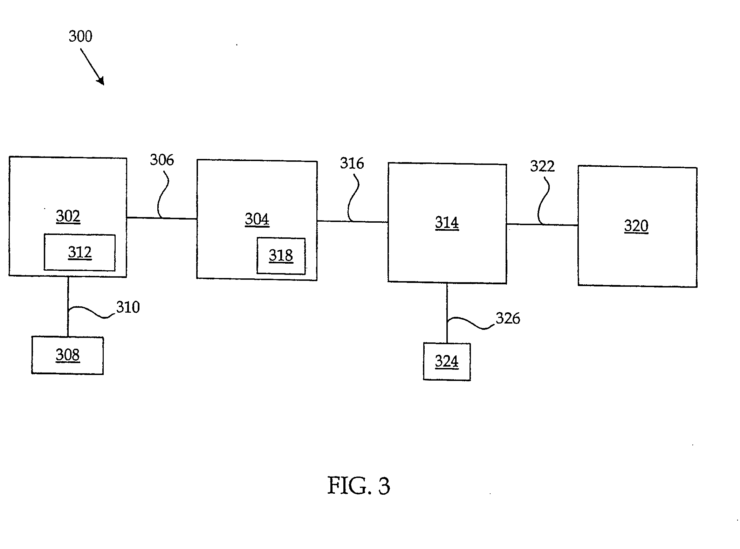

FIG. 3 is a block diagram of a portion of a network in a second embodiment in accordance with the invention. Network 300 operates in accordance with the IEEE 802.3af standard in this embodiment. Network 300 includes an Ethernet device 302, such as a hub or switch, connected to a node 304 via cable 306. Power supply 308 supplies operating power to Ethernet device 302 with cable 310. Node 304 may also be connected to a source of power (not shown). In this embodiment in accordance with the invention, a power device 312 is included in Ethernet device 302 and is known as an "endpoint power sourcing equipment" under the IEEE 802.3af standard.

Ethernet device 302 injects power into cable 306 to supply operating power to node 304. In addition to being a powered node, node 304 acts as a power supply in this embodiment because node 304 supplies operating power to device 314 via cable 316. To supply power to device 314, a power repeater 318 within node 304 injects at least a portion of the power received by node 304 into cable 316.

Device 314 is connected to device 320 via cable 322. In addition to being a powered node, device 314 also acts as a power supply in this embodiment because device 314 supplies operating power to device 320 over cable 322. A power repeater 324 connected to device 314 with cable 326 injects power into cable 322 to supply power to device 320. Power repeaters 318, 324 each may be configured, for example, as a hub, a switch, or another device that receives power and supplies it to one or more output ports.

In one embodiment in accordance with the invention, node 304 notifies Ethernet device 302 as to the amount of power node 304 should receive for itself and devices 314, 320. In another embodiment in accordance with the invention, Ethernet device 302 determines the amount of power to supply to node 304 based on the amount of power needed by node 304 and devices 314, 320. The power requirements of node 304 and downstream devices 314, 320 determine the total number of devices that can receive power from Ethernet device 302 in this embodiment.

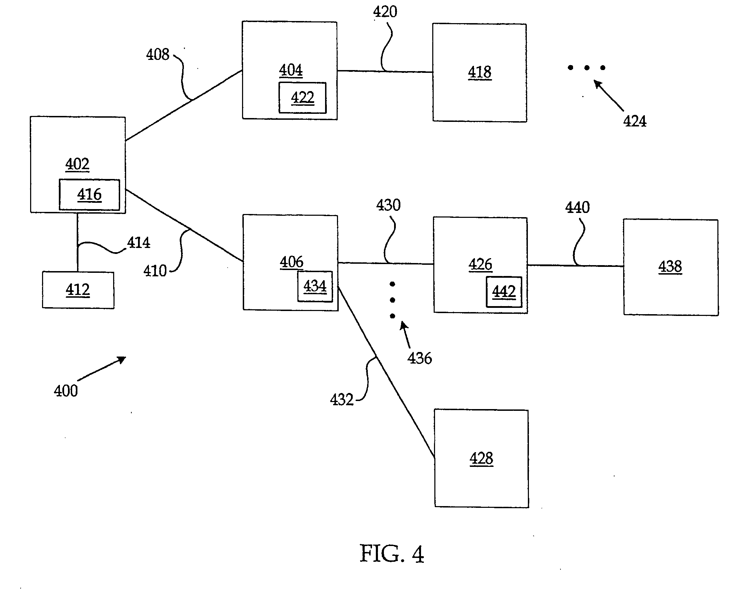

Referring now to FIG. 4, there is shown a block diagram of a portion of a network in a third embodiment in accordance with the invention. Network 400 operates in accordance with the IEEE 802.3af standard in this embodiment. Network 400 includes an Ethernet device 402, such as a hub or switch, connected to two nodes 404, 406 via cables 408, 410, respectively. Power supply 412 supplies power to Ethernet device 402 via cable 414.

In this embodiment in accordance with the invention, a power device 416 is included in Ethernet device 402. Ethernet device 402 injects power into cable 408 to supply operating power to node 404. In addition to being a powered node, node 404 acts as a power supply in this embodiment because node 404 supplies operating power to device 418 using cable 420. A power repeater 422 injects at least a portion of the power received by node 404 into cable 420 to supply power to device 418. Power repeater 422 may be configured, for example, as a hub, a switch, or another device that receives power and supplies it to one or more output ports.

Device 418 may provide power to another downstream device (not shown) in other embodiments in accordance with the invention. Device 418 would then include a power repeater (not shown) to supply power to the downstream device. In other embodiments in accordance with the invention, two or more downstream devices may be connected to device 418 in the linear configuration shown in FIG. 3 or in the hub-and-spoke configuration of FIG. 2. Ellipses 424 represent the additional downstream devices. In these embodiments, each upstream device would include a power repeater that supplies power to its immediate downstream device.

Node 406 is connected to devices 426, 428 via cables 430, 432, respectively. In addition to being a powered node, node 406 acts as a power supply in this embodiment by supplying operating power to devices 426, 428 using cables 430, 432, respectively. A power repeater 434 injects at least a portion of the power received by node 406 into cables 430, 432 to supply power to devices 426, 428. Power repeater 434 may be configured, for example, as a hub, a switch, or another device that receives power and supplies it to one or more output ports. Node 406 may also supply power to additional devices (not shown) in other embodiments in accordance with the invention. Ellipses 436 represent the additional devices.

In the FIG. 4 embodiment, device 426 is connected to downstream device 438 via cable 440. Device 426 uses power repeater 442 to supply operating power to device 438. Power repeater 442 may be configured, for example, as a hub, a switch, or another device that receives power and supplies it to one or more output ports.

Although the invention has been described with reference to Power over Ethernet network connections, the invention is not limited to that implementation. Other embodiments in accordance with the invention may utilize other network protocols that supply power over a network connection.

## Claims

1. A system for supplying power to multiple devices, the system comprising:
a first device (216) receiving power over a first Power over Ethernet (PoE) connection (218); and
one or more downstream devices (220, 222) receiving power from the first device (216), wherein the first device (216) supplies at least a portion of the power received over the first PoE connection (218) to at least one of the one or more downstream devices (220, 222).

2. The system of claim 1, further comprising a power device (204) connected to the first device (216) and supplying power to the first device (216) over the first PoE connection (218).

3. The system of claim 1 or claim 2, wherein the first device (216) includes a power repeater (228).

4. The system of claim 3, wherein the power repeater (324) is connected to the first device (314).

5. The system of claim 3, wherein the power repeater (228) is implemented within the first device (216).

6. The system of claim 3, wherein the one or more downstream devices (220, 222) are connected to the first device (216) in a hub-and-spoke configuration with the first device (216) comprising the hub in the hub-and-spoke configuration, and wherein the power repeater (228) supplies at least a portion of the power received over the first PoE connection (218) to all of the downstream devices (220, 222) over a PoE connection associated with each downstream device (224, 226).

7. The system of claim 3, wherein the one or more downstream devices (314, 320) are connected to the first device (304) in a linear configuration, and wherein the power repeater (318) supplies at least a portion of the power received over the first PoE connection (306) to a first downstream device (314) over a PoE connection (316) between the first device (304) and the first downstream device (314).

8. The system of claim 7, wherein each downstream device (314) supplying power to a subsequent downstream device (320) includes a power repeater (324) that supplies power using respective PoE connections (322).

9. A method for supplying power to multiple devices, comprising:
providing power over a first Power over Ethernet (PoE) connection (218); and
providing power over one or more downstream PoE connections (224, 226), wherein the power provided over the one or more downstream PoE connections (224, 226) comprises at least a portion of the power provided over the first PoE connection (218).
